# DEMANDE DE BREVET EUROPEEN

(11) **EP 4 790 298 A1**
(43) Date de publication de la demande: **12.08.2026**
(21) Numéro de dépôt: 26155178.2
(22) Date de dépôt: 29.01.2026
(51) Int. Cl.: F16L 23/032, F16L 23/18

(54) **SYSTEME DE RACCORDEMENT A DOUBLES BRIDES ET BAGUE D ETANCHEITE**

(30) Priorité: 05.02.2025 FR 2501201
(71) Demandeur: Nobel Plastiques, 78630 Orgeval (FR)
(72) Inventeur: VARLET, Stéphane, 52100 SAPIGNICOURT (FR); MILHAS, Pierre, 51300 VITRY-LE-FRANCOIS (FR)
(74) Mandataire: Cabinet Boettcher

(57) **Abrégé**

Système de raccordement comprenant une première bride (11) et une deuxième bride (111) et une bague d'étanchéité (17) agencée entre les deux brides.

Selon l'invention, le bague d'étanchéité comporte au moins :
- Une partie inférieure (29), et
- Une partie supérieure (30) prolongeant la partie inférieure,
l'une de la partie inférieure ou de la première bride comprenant au moins un élément en relief contre lequel l'autre de la partie inférieure ou de la première bride vient en appui ; et l'une de la partie supérieure ou de la deuxième bride comprenant au moins un élément en relief contre lequel l'autre de la partie supérieure ou de la deuxième bride vient en appui.

## Description

La présente invention concerne un système de raccordement comprenant deux brides et une bague d'étanchéité agencée à la jonction entre les deux brides.

### ARRIERE PLAN DE L'INVENTION

Par contrainte environnementale et/ou sécuritaire, certains fluides ne doivent pas être dégagés dans l'atmosphère comme par exemple des fluides réfrigérants. Ainsi, dans des applications de transfert de tels fluides, i.e. de fluides à haut risque de perméabilité, les systèmes de raccordement entre deux éléments doivent être particulièrement étanches.

En outre, le recours à certains fluides impose que ces systèmes de raccordement soient robustes à une ou plusieurs contraintes. Par exemple le fluide réfrigérant R744 est utilisé dans des conditions de pression relativement élevée (et par exemple entre 20 et 120 bars). Ceci impose des contraintes techniques et de sécurité très contraignantes en particulier au niveau d'un système de raccordement à travers lequel circule un tel fluide.

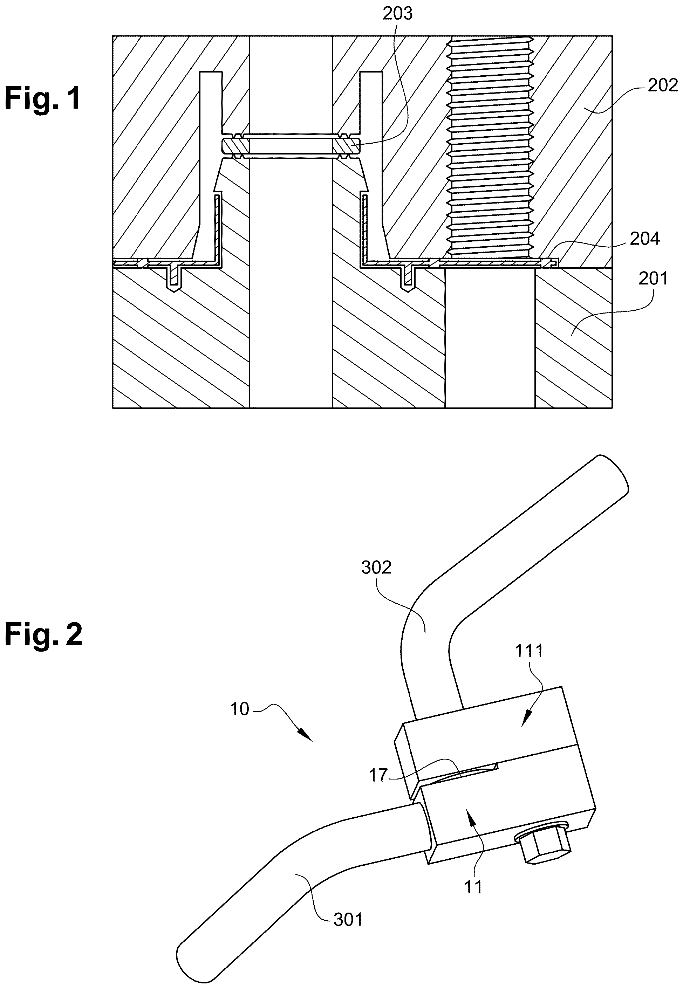

En référence à la figure 1 est illustré un système de raccordement de l'art antérieur pouvant être utilisé dans le cadre d'une installation à travers laquelle circule un fluide réfrigérant R744.

Un tel système comprend deux brides 201, 202 fixées entre elles. Les deux brides 201, 202 sont conformées pour présenter chacune une forme complexe venant en appui l'une contre l'autre via une rondelle 203 métallique. Un joint additionnel 204, également de forme complexe, est par ailleurs agencé entre les deux brides 201, 202 de sorte à entourer extérieurement la zone de contact entre les deux formes complexes des deux brides 201, 202.

Un tel système, bien qu'efficace d'un point de vue de l'étanchéité, présente l'inconvénient d'être complexe de structure : il est donc coûteux et délicat à produire.

### OBJET DE L'INVENTION

L'invention a notamment pour but de proposer une solution proposant un système de raccordement simplifié pouvant être employé dans une installation de transport de fluide (gaz et/ou liquide).

### RESUME DE L'INVENTION

A cet effet, on prévoit, selon l'invention, un système de raccordement comprenant une première bride et une deuxième bride, chacune des brides étant munie d'un canal la traversant de part en part, le système de raccordement comprenant par ailleurs une bague d'étanchéité agencée entre les deux brides et munie d'une ouverture assurant la mise en communication des deux canaux entre eux.

Selon l'invention, la bague d'étanchéité comporte au moins :
- Une partie inférieure reposant au moins en partie sur au moins une zone de la première bride, et
- Une partie supérieure prolongeant la partie inférieure, au moins une zone de la partie supérieure étant en contact avec au moins une zone de la deuxième bride,
l'une de la partie inférieure ou de la première bride comprenant au moins un élément en relief contre lequel l'autre de la partie inférieure ou de la première bride vient en appui ; et l'une de la partie supérieure ou de la deuxième bride comprenant au moins un élément en relief contre lequel l'autre de la partie supérieure ou de la deuxième bride vient en appui.

La bague d'étanchéité permet d'assurer une très bonne étanchéité au sein du système et en particulier au niveau d'une interface entre des zones en contact entre les deux brides (étanchéité externe) et/ou d'une interface entre les canaux (étanchéité interne).

L'invention s'avère par ailleurs simple de structure.

Par ailleurs, une telle invention s'avère relativement peu coûteuse à produire.

Par ailleurs, une telle invention s'avère relativement simple à monter.

Par ailleurs, une telle invention s'avère démontable. Optionnellement, la bague d'étanchéité est conformée de sorte à présenter au moins une première zone et une deuxième zone distincte de la première zone, la première zone étant dans un matériau différent de celui de la deuxième zone. Optionnellement, la bague d'étanchéité est montée sur l'extérieur d'une portion de la première bride. Optionnellement, la portion de la première bride est conformée en une tête s'étendant axialement en direction de la deuxième bride.

Optionnellement, la bague d'étanchéité comporte au moins un élément additionnel en relief apte à venir en appui contre une surface externe de la tête.

Optionnellement, un logement est ménagé dans la deuxième bride, la portion de la première bride étant logée au moins partiellement dans le logement, la bague d'étanchéité étant agencée entre le logement et ladite portion. Optionnellement, une gorge est ménagée dans le fond du logement, le système comprenant un joint d'étanchéité agencé dans ladite gorge.

Optionnellement, la bague d'étanchéité est au moins en partie en un matériau élastiquement déformable.

Optionnellement, la première zone est formée au moins de la partie supérieure et la deuxième zone est ici formée d'au moins une partie de la partie inférieure, la deuxième zone étant dans un matériau plus souple que la première zone.

Optionnellement, la partie supérieure est conformée en un godet.

Optionnellement, la partie inférieure est conformée en une couronne.

Optionnellement, la partie supérieure porte au moins un des éléments en relief qui présente au moins une portion dont une section transversale est en pointe.

Optionnellement, la partie inférieure porte au moins un des éléments en relief qui présente au moins une extrémité libre arrondie ou polygonale.

Optionnellement, la bague d'étanchéité est conformée en un solide de révolution.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue en coupe axiale d'un système de raccordement de l'art antérieur ;
[Fig. 2] la figure 2 est une vue perspective d'un système de raccordement selon un mode de réalisation particulier de l'invention ;
[Fig. 3] la figure 3 est une vue éclatée du système de raccordement illustré à la figure 2 ;
[Fig. 4] la figure 4 est une vue en coupe axiale d'une partie du système de raccordement illustré à la figure 2,
[Fig. 5] la figure 5 est une vue agrandie d'une partie de la vue en coupe de la figure 4,
[Fig. 6] la figure 6 est une vue en perspective de la bague d'étanchéité du système de raccordement illustré à la figure 2.

### DESCRIPTION DETAILLEE DE L'INVENTION

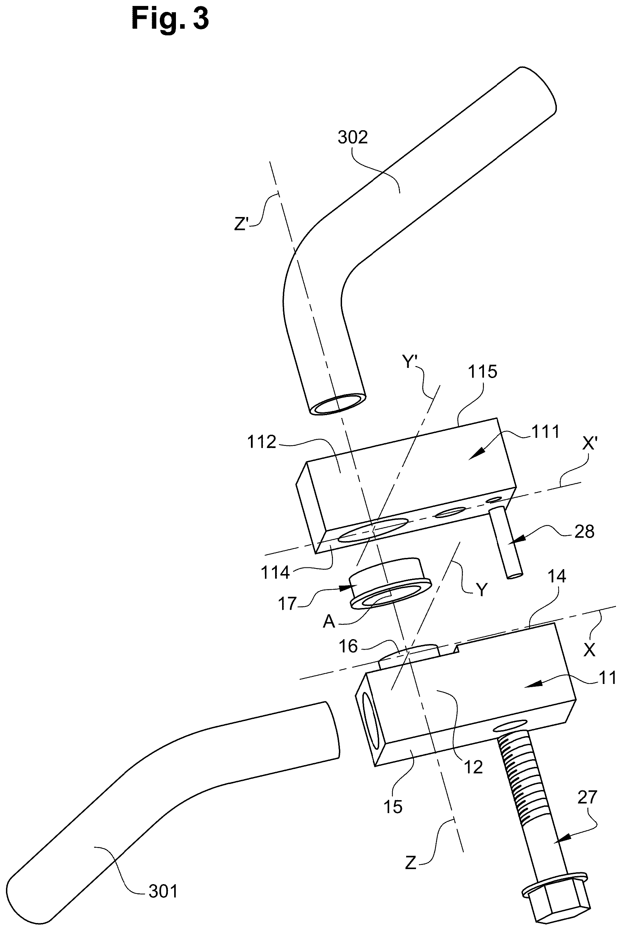

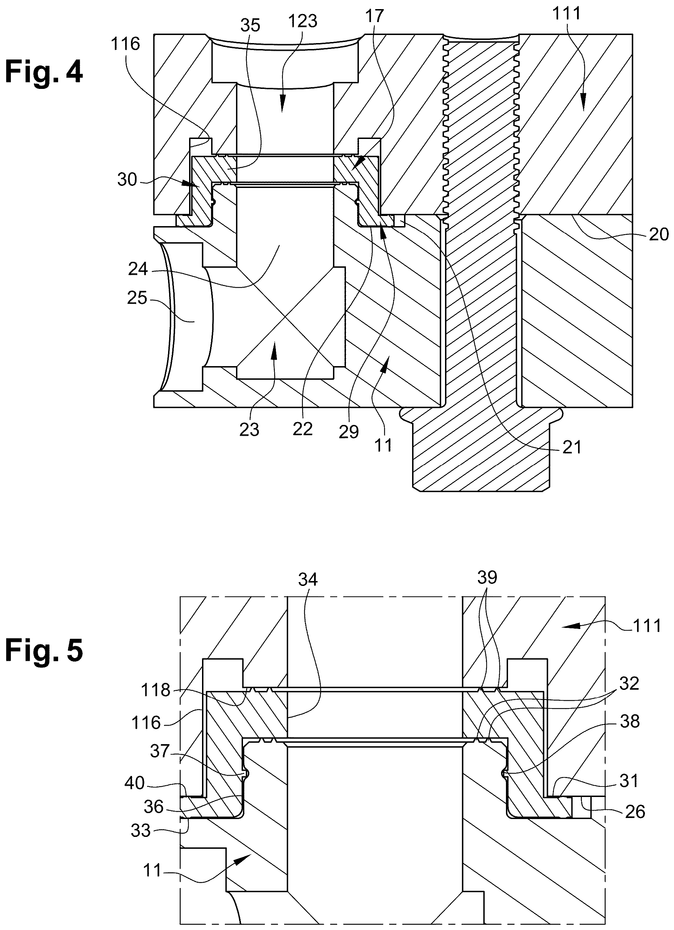

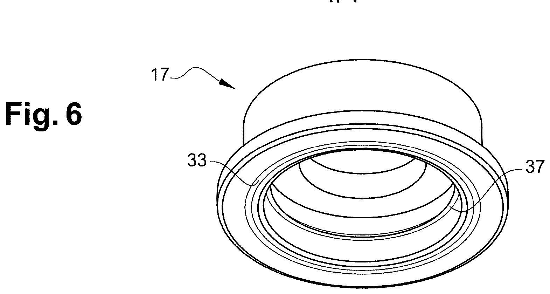

En référence aux figures 2 à 6, un système de raccordement 10 selon un mode de réalisation particulier de l'invention va être décrit.

Le système de raccordement 10 décrit est par exemple implantable dans une installation de transport d'un fluide à moyenne pression. Par moyenne pression, on entend par exemple une pression comprise entre 50 et 90 bars et par exemple entre 60 et 80 bars.

Un tel système de raccordement 10 est par exemple implantable dans une installation de transport d'un fluide réfrigérant comme par exemple dans une installation de climatisation. Le fluide est par exemple de l'air et/ou un fluide réfrigérant comme par un exemple un fluide réfrigérant R744.

Un tel système de raccordement 10 est par exemple implantable dans une installation de transport d'un fluide comme par exemple un véhicule terrestre comme par exemple une voiture. Le système de raccordement 10 comporte une première bride 11 et une deuxième bride 111.

La première bride 11 comprend une base 12 présentant deux faces principales 14, 15. De préférence, les deux faces principales 14, 15 sont parallèles entre elles.

Par exemple la première face principale 14 s'étend au moins en partie dans un plan défini par un premier axe X et un deuxième axe Y orthogonaux l'un par rapport à l'autre. La première face principale 14 s'étend ainsi longitudinalement selon le premier axe X et latéralement selon le deuxième axe Y.

De préférence, la base 12 présente au moins un décrochement au niveau de sa première face principale 14. La première face principale 14 présente ici une première marche 20 (celle s'étendant dans le plan défini par les axes X et Y), une contre-marche 21 et une deuxième marche 22 (d'un niveau inférieur à la première marche 21 selon un troisième axe Z qui est orthogonal au premier axe X et au deuxième axe Y). De préférence, les deux marches 20, 22 s'étendent parallèlement l'une à l'autre et donc au plan défini par les axes X et Y. De préférence, la contre-marche 21 s'étend orthogonalement à au moins l'une des deux marches 20, 22. La contre-marche 21 s'étend ainsi ici dans un plan contenant les axes Y et Z. Par exemple, le décrochement est réalisé par un méplat réalisé dans la base 12 au niveau de sa première face principale 14. Le méplat dessine ainsi un décrochement dans le sens du premier axe X. Par exemple le méplat s'étend longitudinalement sur toute la largeur (selon le deuxième axe Y) de la base 12.

La base 12 comporte par ailleurs une tête 16 s'étendant axialement selon un axe donné depuis la première face principale 14 en direction opposée à la deuxième face principale 15. Par exemple, l'axe donné forme une normale au plan dans lequel s'étend la première marche 20 et/ou la deuxième marche 22 et/ou la première face principale 14. L'axe donné est ici parallèle ou confondu avec le troisième axe Z.

La tête 16 est ici d'une seule pièce avec le reste de la base 12.

La tête 16 n'est pas ici centrée sur la base 12. Par exemple la tête 16 s'étend à partir d'une première extrémité longitudinale de la base 12. De préférence, la tête 16 s'étend à partir de la deuxième marche 22.

De préférence, la tête 16 est d'une hauteur (selon le troisième axe Z) supérieure à la hauteur de la contre-marche 21. De la sorte, la tête 16 dépasse de l'ensemble de la première face principale 14. En particulier la tête 16 dépasse de la première face principale 14 selon le troisième axe Z.

Par exemple, la tête 16 est conformée en un solide de révolution et par exemple en un cylindre et par exemple en un cylindre creux. La tête 16 est donc ici conformée en un manchon.

Ainsi, au moins un canal 23 est ménagé dans la base 12. De préférence ledit canal 23 comporte au moins un premier tronçon 24 s'étendant axialement selon le troisième axe Z. De préférence, ledit premier tronçon 24 s'étend coaxialement à la tête 16. De préférence, ledit premier tronçon 24 présente une première extrémité axiale débouchant sur une face supérieure de la tête 16 (soit celle opposée à la face inférieure formant jonction avec la deuxième marche 22). Optionnellement, le premier tronçon 24 est cylindrique sur au moins un tronçon.

Dans le cas présent, la deuxième extrémité axiale du premier tronçon 24 débouche dans un deuxième tronçon 25 du canal 23. Ledit deuxième tronçon 25 présente par exemple une section transversale supérieure, inférieure ou identique à celle du premier tronçon 24. Optionnellement, le premier tronçon 24 est cylindrique sur au moins un tronçon.

Le deuxième tronçon 25 s'étend par exemple de manière orthogonale ou inclinée au premier tronçon 24. De préférence, la direction selon laquelle s'étend le deuxième tronçon 25 est liée à celle de l'extrémité d'un tuyau 301 insérée dans ledit deuxième tronçon 25. Afin d'assurer une bonne connexion du tuyau 301 à la première bride 11, la deuxième extrémité axiale du deuxième tronçon 25 dessine un épaulement interne avec le reste du deuxième tronçon 25, épaulement contre lequel vient s'appuyer l'extrémité du tuyau 301.

Par exemple le deuxième tronçon 25 s'étend axialement selon le premier axe X. Par exemple la première extrémité axiale du deuxième tronçon 25 est celle dans laquelle débouche la deuxième extrémité axiale du premier tronçon 24. Par exemple la deuxième extrémité axiale du deuxième tronçon 25 débouche sur l'un des flancs de la base 12.

On comprend donc que le canal 23 dessine un coude dans la base 12. On comprend également que la tête 16 est creuse. La tête 16 présente ici une section transversale (selon un plan de coupe de normale le troisième axe Z) en anneau. Ledit anneau est ici de préférence circulaire, extérieurement et/ou intérieurement. Dans le cas présent, les dimensions externes et internes de la tête 16 sont constantes sur toute la hauteur de la tête 16.

La première bride 11 est par exemple en ou à base de métal et par exemple en ou à base d'aluminium et par exemple en ou à base d'aluminium de série 300 et ou de série 6060 à 6063. La deuxième bride 111 comprend une base 112 présentant deux faces principales 114, 115. De préférence, les deux faces principales 114, 115 sont parallèles entre elles.

Par exemple la première face principale 114 s'étend dans un plan défini par un premier axe X' et un deuxième axe Y' orthogonaux l'un par rapport à l'autre. La première face principale 114 s'étend ainsi longitudinalement selon le premier axe X' et latéralement selon le deuxième axe Y'. Dans le cas présent, lorsque les deux brides sont fixées entre elles, le premier axe X et le premier axe X' sont confondus ou parallèles entre eux et le deuxième axe Y et le deuxième axe Y' sont également confondus ou parallèles entre eux.

De préférence, la base 112 présente au moins un logement 116. Par exemple, le logement 116 s'étend axialement selon un troisième axe Z' qui est orthogonal au premier axe X' et au deuxième axe Y'. Le logement 116 s'étend ainsi axialement depuis la première face principale 114 en direction de la deuxième face principale 115.

Le logement 116 n'est pas ici centré sur la base 112. Par exemple le logement 116 s'étend à partir d'une première extrémité longitudinale de la base 112.

Dans le cas présent, le logement 116 est conformé pour recevoir au moins un tronçon de la tête 16. Le logement 116 présente ici une section transversale (de plan de coupe de normale le troisième axe Z') dont le contour est de préférence de forme identique au contour externe de la tête 16 (mais de dimensions supérieures). Le logement 116 est ici débouchant uniquement au niveau de la face supérieure 114 (mais n'est pas débouchant sur un flanc de la base 112 ou au niveau de la deuxième face principale 115).

Par ailleurs, au moins un canal est ménagé dans la base 112. De préférence ledit canal comporte au moins un premier tronçon 123 s'étendant axialement selon le troisième axe Z'. De préférence, ledit premier tronçon 123 s'étend coaxialement au logement 116. De préférence, ledit premier tronçon 123 présente une première extrémité axiale débouchant dans le fond du logement 116.

Dans le cas présent, la deuxième extrémité axiale du premier tronçon 123 débouche au niveau de la deuxième face principale 115.

On comprend que le canal s'étend rectilignement dans la base 112. De préférence, la direction selon laquelle s'étend le canal est liée à celle de l'extrémité d'un tuyau 302 insérée dans ledit canal. Afin d'assurer une bonne connexion du tuyau 302 à la deuxième bride 111, la deuxième extrémité axiale du canal dessine un épaulement interne avec le reste du canal, épaulement contre lequel vient s'appuyer l'extrémité du tuyau 302.

La deuxième bride 111 est par exemple en ou à base de métal et par exemple en ou à base d'aluminium et par exemple en ou à base d'aluminium de série 300 et ou de série 6060 à 6063. La deuxième bride 111 est par exemple dans le même matériau que la première bride 11.

La deuxième bride 111 et la première bride 11 sont avantageusement d'une construction simplifiée vis-à-vis des brides existantes l'art antérieur.

En service, les deux brides 11, 111 sont en appui l'une contre l'autre de sorte que la première face principale 14 de la première bride 11 et la première face principale 114 de la deuxième bride 111 sont en appui l'une contre l'autre. Ici, les deux brides 11, 111 sont en appui l'une contre l'autre uniquement au niveau de la première marche 20. Le contact au niveau de la première marche 20 est ainsi un contact plan/plan. Optionnellement, les deux brides 11 et 111 présentent un même contour externe à leur interface. Dans le cas présent, la deuxième bride 111 est d'une longueur supérieure à la première marche 20 (longueur considérée selon le premier axe X). Ainsi, la deuxième bride 111 s'étend au-delà de la première marche 20 de sorte à former un plafond pour la deuxième marche 22. De préférence, la deuxième bride 111 s'étend de sorte à former un plafond pour l'ensemble de la deuxième marche 22.

Par ailleurs, les deux brides 11, 111 sont conformées de sorte que le logement 116 s'étende ici intégralement au-dessus de la deuxième marche 22. De la sorte, au moins une zone de la face principale 114 de la deuxième bride 111 délimitant le logement 116 s'étend à cheval entre les deux marches 20, 22. Ainsi, la deuxième bride 111 forme une bordure 26 à la contre-marche 21.

De préférence, les deux brides 11, 111 sont conformées de sorte que la tête 16 s'étende en partie dans le logement 116. En particulier, la face supérieure de la tête 16 s'étend dans le logement. En revanche, la face inférieure de la tête 16, solidaire de la base 12, s'étend hors du logement 116 et donc hors de la deuxième bride 111. En particulier, au moins la première extrémité axiale du premier tronçon 24 du canal 23 s'étend dans le logement 116. En revanche, la deuxième extrémité axiale du premier tronçon 24 du canal 23 s'étend hors du logement 116 et donc hors de la deuxième bride 111. De préférence, ainsi agencés, la tête 16 et le logement 116 s'étendent coaxialement l'un à l'autre.

De préférence, le premier tronçon 24 du canal 23 et le premier tronçon 123 s'étendent coaxialement l'un à l'autre.

Le système 10 comporte des moyens de fixation des deux brides 11, 111 entre elles. Par exemple, les moyens de fixation comprennent au moins un ensemble 27 vis-écrou agencé dans les brides 11, 111 et/ou un ensemble 27 goujon-écrou. De préférence, cet ensemble 27 s'étend hors du logement 116 et/ou de l'espace ménagé entre la face principale 114 et la deuxième marche 22 en regard. Par exemple l'ensemble 27 s'étend axialement selon un axe qui est ici parallèle au troisième axe Z et/ou au troisième axe Z'.

Les deux brides 11, 111 sont ainsi rigidement fixées l'une à l'autre.

Le système 10 comporte ici des moyens de centrage des deux brides 11, 111 l'une par rapport à l'autre.

On note que l'ensemble logement 116/tête 16 forme déjà ici un premier moyen de centrage des deux brides 11, 111 entre elles.

Le système 10 peut avantageusement comprendre un deuxième moyen de centrage 28 sous la forme d'au moins un pion de centrage et/ou d'une goupille agencée entre les deux brides 11, 111. Par exemple, le au moins deuxième moyen de centrage 28 s'étend hors du logement 116 et/ou de l'espace ménagé entre la face principale 114 et la deuxième marche 22 en regard. Par exemple, le au moins deuxième moyen de centrage 28 s'étend axialement selon un axe qui est ici parallèle au troisième axe Z et/ou au troisième axe Z'.

Alternativement ou en complément, la goupille sert de moyen de fixation additionnel des deux brides 11, 111 entre elles. La base 12 comporte par ailleurs une bague d'étanchéité 17. La bague d'étanchéité 17 est ici conformée de sorte à présenter une partie inférieure 29 prolongée par une partie supérieure 30.

La partie supérieure 30 et/ou la partie inférieure 29 et /ou la bague d'étanchéité 17 est ici conformée en un solide de révolution autour d'un axe A. De préférence, l'axe A est parallèle ou confondu avec le troisième axe Z et/ou le troisième axe Z' et/ou la direction axiale de la tête 16 lorsque la bague d'étanchéité 17 est en place dans le système.

La bague d'étanchéité 17 est ici symétrique au moins selon un plan de symétrie. Dans le cas présent, la bague d'étanchéité 17 est symétrique selon au moins un plan de symétrie comprenant l'axe A.

La partie supérieure 30 est par exemple conformée en un cylindre, et par exemple en un cylindre creux, fermé à une de ses extrémités par une rondelle 35 percée. La partie supérieure 30 est donc ici conformée en un godet percé.

La partie inférieure 29 est par exemple conformée en un cylindre et par exemple en un cylindre creux. La partie inférieure 29 est cependant d'une hauteur (considérée selon l'axe A) moins importante que la partie supérieure 30. Ainsi, la partie inférieure 29 est ici conformée en une couronne. La partie inférieure 29 présente par ailleurs ici une section transversale (considérée selon un plan de section de normale l'axe A) dont le diamètre externe (le diamètre étant à prendre au sens mathématique le plus large dans la présente demande) est plus important que le diamètre externe celui de la section transversale de la partie supérieure 30. Ainsi la partie inférieure 29 et la partie supérieure 30 forment conjointement un épaulement 31 de la bague d'étanchéité 17 à niveau de leur jonction. L'épaulement 31 est ainsi agencé sur la surface externe de la bague d'étanchéité 17. Ainsi, la partie inférieure 29 forme un rebord à la partie supérieure 30.

De préférence, la partie inférieure 29 présente une section transversale dont le diamètre interne est identique au diamètre interne de la section transversale de la partie supérieure 30. Ainsi la partie inférieure 29 et la partie supérieure 30 dessinent conjointement une conduite 36 interne à la bague d'étanchéité 17, conduite qui demeure de section constante à l'intersection entre la partie inférieure 29 et la partie supérieure 30. Ladite conduite 36 s'étend ainsi axialement dans la bague d'étanchéité 17 le long du premier axe X. Ladite conduite 36 conserve un diamètre constant sur toute sa longueur (considérée selon le premier axe X). Ladite conduite 36 s'étend ici de sorte à déboucher hors de la bague d'étanchéité 17 côté face inférieure de la bague d'étanchéité 17 (associée à la partie inférieure 29). En revanche, ladite conduite 36 n'est pas débouchante hors de la bague d'étanchéité 17 côté face supérieure de la bague d'étanchéité 17 (associée à la partie supérieure 30). Comme déjà indiqué, la face supérieure de la bague d'étanchéité 17 est fermée et par exemple fermée par une rondelle 35 percée.

La rondelle 35 est par exemple conformée de sorte que le diamètre externe de sa section transversale corresponde au diamètre interne de la section transversale du cylindre formant la partie supérieure 30. Ainsi la rondelle 35 forme conjointement avec ledit cylindre une première extrémité axiale plane (notamment dans un plan de normale l'axe A) pour la bague d'étanchéité 17. La rondelle 35 présente ici un diamètre externe circulaire.

La rondelle 35 et le cylindre de la partie supérieure 30 forment une unique et même pièce.

La rondelle 35 comporte de manière connue en soi un orifice 34 la traversant de part en part. Dans le cas présent, l'orifice 34 est centré dans la rondelle 35. L'orifice 34 et la rondelle 35 s'étendent donc coaxialement à l'axe A. L'orifice 34 présente ici un diamètre circulaire. L'orifice 34 présente optionnellement une section transversale constante sur toute sa longueur. L'orifice 34 débouche ainsi à une première extrémité axiale sur la face supérieure de la bague d'étanchéité 17 et au niveau de sa face inférieure dans la conduite 36. L'ensemble formé par l'orifice 34 et la conduite 36 traverse la bague d'étanchéité 17 de part en part (selon ici l'axe A).

La partie inférieure 29 et la partie supérieure 30 forment conjointement une unique et même pièce.

La bague d'étanchéité 17 est par exemple au moins en partie dans un matériau différent d'au moins l'une des deux brides 11, 111 et par exemple au moins en partie dans un matériau plus souple qu'au moins l'une des deux brides 11, 111.

De préférence, la bague d'étanchéité 17 présente au moins deux zones dans des matériaux différents. Par exemple, la bague d'étanchéité 17 présente deux zones chacune en matériau différente. La bague d'étanchéité 17 est ici bi-matière. Une telle bague d'étanchéité 17 est par exemple fabriquée par surmoulage.

La première zone est ici formée au moins de la partie supérieure 30 et la deuxième zone est ici formée d'au moins une partie de la partie inférieure 29. Par exemple la première zone est formée de la partie supérieure 30 et d'une portion de la partie inférieure 29 formant la jonction avec la partie supérieure 30. Par exemple la deuxième zone est formée de la partie inférieure 29 hors ladite zone de jonction.

La deuxième zone est de préférence dans un matériau plus souple que la première zone. La deuxième zone est de préférence dans un matériau plus souple que celui des deux brides 11, 111. De préférence, la première zone est également dans un matériau plus souple que celui des deux brides. Ainsi, la bague d'étanchéité 17 est entièrement plus souple que les deux brides 11, 111.

Par exemple, la deuxième zone est dans une matière élastiquement déformable. Par exemple la deuxième zone est en ou à base d'élastomère. Par exemple la deuxième zone est en ou à base de EPDM et/ou de NBR et/ou de HNBR, etc.

Par exemple, la première zone est dans une matière plastique. Par exemple la première zone n'est pas en un élastomère. Par exemple la première zone est en ou à base de PPA et/ou de PA et/ou de PEEK, etc.

Malgré la présence de ces zones en matériaux différents, la bague d'étanchéité 17 forme une seule pièce unitaire.

En service, la bague d'étanchéité 17 est montée entre les deux brides 11, 111. En particulier, la bague d'étanchéité 17 est montée entre les deux brides 11, 111 au niveau de la coopération entre la tête 16 et le logement 116. Il n'y a donc pas de joint d'étanchéité agencé entre le fond 118 du logement 116 et la surface en regard de la tête 16 mais uniquement la bague d'étanchéité 17.

Par exemple la bague d'étanchéité 17 est montée sur la tête 16 et l'ensemble bague d'étanchéité 17 et tête 16 est agencé dans le logement 116. Ainsi la bague d'étanchéité 17 est montée à l'extérieur de la tête 16 et donc de la première bride 12.

En particulier, le système 10 est configuré de sorte que lorsque la bague d'étanchéité 17 est agencée entre les deux brides 12, 112 :
- la face supérieure de la bague d'étanchéité 17 soit au moins en partie en contact avec au moins une partie du fond 118 du logement 116, et/ou
- qu'au moins une zone de la paroi interne de la bague d'étanchéité 17 soit au moins en partie en contact avec au moins une partie de la paroi latérale externe de la tête 16, et/ou
- que la face inférieure de la rondelle 35 soit au moins en partie en appui contre la face supérieure de la tête 16, et/ou
- que la face inférieure de la bague d'étanchéité 17 soit au moins en partie en contact avec la base 12 et par exemple la deuxième marche 22, et/ou
- que l'épaulement 31 soit au moins en partie en contact avec le rebord 26 dessiné par la deuxième bride 111 à niveau de la contre-marche 21 et/ou qu'une face supérieure externe de la partie inférieure 29 (dessinant l'épaulement 31) soit au moins en partie en contact avec la face inférieure de la deuxième bride 111, et/ou
- le fond 118 du logement 116 n'est relié à la surface en regard de la tête 16 que par l'intermédiaire de la bague d'étanchéité 17.

On comprend ainsi que c'est ici la partie inférieure 29 qui repose contre la première bride 11 tandis que la partie supérieure 30 entoure la tête 16 (latéralement et supérieurement).

On comprend également que la hauteur de la partie inférieure 29 (selon le troisième axe Z) ne dépasse pas (ou peu) de la hauteur de la contre-marche 21. Dans les faits, la hauteur de la partie inférieure 29 est égale, à plus ou moins 2% près, à celle de la contre-marche 21.

On comprend également que lorsque la bague d'étanchéité 17 est en place entre les brides 11, 111, l'axe A est parallèle ou confondu avec les axes Z, Z'. Ainsi agencée, la bague d'étanchéité 17 s'étend coaxialement à la tête 16 et/ou au logement 116.

Par ailleurs, on comprend que l'orifice 34 de la rondelle 35 forme une ouverture de la bague d'étanchéité 17, ouverture permettant la mise en liaison du premier tronçon 123 de la deuxième bride 111 avec le premier tronçon 24 de la première bride 11. Bien entendu, l'orifice 34 est conformé pour présenter la même section transversale que le premier tronçon 123 au moins au niveau de l'interface entre le premier tronçon 123 et la rondelle 35 et pour présenter la même section transversale que le premier tronçon 24 au moins au niveau de l'interface entre le premier tronçon 24 et la rondelle 35. Dans le cas présent, l'orifice 34 présente une même section transversale sur toute sa longueur. Ainsi agencé, l'orifice 34 s'étend coaxialement au premier tronçon 24 et au premier tronçon 123.

On comprend également ici que les contacts entre la bague d'étanchéité 17 d'une part et la première bride 11 sont majoritairement des contacts dans un plan contenant les axes X et Y.

On comprend également ici que les contacts entre la bague d'étanchéité 17 d'une part et la deuxième bride 111 sont uniquement des contacts dans un plan contenant les axes X' et Y'. En effet, la paroi latérale externe de la partie supérieure 30 n'est pas ici en contact avec la face latérale du logement 116 : le diamètre externe de la paroi latérale externe de la partie supérieure 30 est strictement inférieur au diamètre du logement 116 pour toute la hauteur de la paroi latérale externe et du logement 116.

De préférence, la bague d'étanchéité 17 et la première bride 11 sont pourvus de moyens d'accouplement. De préférence, la bague d'étanchéité 17 et la première bride 11 comportent des moyens d'accouplement agencés dans au moins une zone de l'interface entre la bague d'étanchéité 17 et la première bride 11 et de préférence dans au moins deux zones différentes de l'interface entre la bague d'étanchéité 17 et la première bride 11 et de préférence dans au moins trois zones différentes de l'interface entre la bague d'étanchéité 17 et la première bride 11.

Par exemple la première zone correspond à l'interface entre la face inférieure de la rondelle 35 (soit celle tournée vers la tête 16) et la face supérieure de la tête 16. Par exemple, la deuxième zone correspond à l'interface entre la paroi de la conduite 36 et la paroi latérale externe de la tête 16. Par exemple la troisième zone correspond à l'interface entre la face inférieure de la bague d'étanchéité 17 et la base 12 (dans le cas présent la deuxième marche 22).

Les moyens d'accouplement comportent par exemple au moins un élément en relief 32 agencé au niveau de la première zone et par exemple plusieurs éléments en relief 32. Au moins l'un des éléments en relief 32 est porté par la bague d'étanchéité 17 et/ou au moins l'un des éléments en relief 32 est porté par la tête 16. Dans le cas présent, c'est la tête 16 qui porte les différents éléments en relief. Par exemple, les éléments en relief sont en appui contre la face inférieure de la rondelle 35. De préférence, le ou les éléments en relief 32 sont venus de matière avec le ou les éléments le portant (bague d'étanchéité 17 ou tête 16).

Par exemple, l'élément en relief est un cordon. Le cordon présente optionnellement une section radiale en pointe et par exemple en triangle. De la sorte, au moins le sommet du cordon est écrasé par la surface de l'élément (bague d'étanchéité 17 ou tête 16) en regard. Dans le cas présent, mis à part au niveau des éléments en relief 32, la face inférieure de la rondelle 35 n'est pas en contact avec la face supérieure de la tête 16.

Par exemple, le cordon s'étend sur au moins une partie d'une circonférence de la face supérieure de la tête 16. Dans le cas présent, le cordon est fermé. Le cordon forme ainsi une circonférence entière sur la face supérieure de la tête 16. Le cordon est ici conformé en un anneau.

On comprend donc qu'il n'existe pas de rainure associée aux éléments en relief 32 : les éléments en relief 32 viennent directement en contact avec la surface plane de l'élément (bague d'étanchéité 17 ou tête 16) en regard.

De préférence, les moyens d'accouplement comportent deux éléments en relief 32 agencés au niveau de la première zone. Le deuxième élément en relief est ici identique au premier élément en relief qui a été décrit à la différence que le deuxième cordon présente un diamètre plus important que le premier cordon de sorte à entourer extérieurement et circon-férentiellement le premier cordon.

Les moyens d'accouplement comportent par exemple un premier couple organe mâle 37 /organe femelle 38 agencé au niveau de la deuxième zone. Au moins l'un des organes mâle 37 ou femelle 38 est porté par la bague d'étanchéité 17 et l'autre des organes mâle 37 ou femelle 38 est porté par la tête 16. Dans le cas présent, c'est la tête 16 qui porte le ou les organes femelles 38 et le bague d'étanchéité le ou les organes mâles 37. Par exemple, l'organe mâle 37 est un élément en relief venant s'insérer dans une rainure formant l'organe femelle 38 correspondant. De préférence, l'organe mâle 37 est venu de matière avec l'élément le portant (bague d'étanchéité 17 ou tête 16). De préférence, l'organe femelle 38 est ménagé directement dans l'élément le portant (bague d'étanchéité 17 ou tête 16).

Par exemple, l'élément en relief est un godron. Le godron présente optionnellement une section radiale en polygone et par exemple en quadrilatère et par exemple en carré, en trapèze ou en rectangle. De la sorte, au moins l'extrémité libre du godron s'étend au moins en partie dans la rainure associée. Par exemple ladite extrémité libre est en contact avec au moins une partie de la rainure et par exemple avec le fond de la rainure.

De préférence, lorsque la bague d'étanchéité 17 est montée sur la tête 16 mais que les deux brides 11, 111 ne sont pas fixées entre elles, un jeu existe entre le godron et la rainure associée selon au moins une direction de l'espace et de préférence selon au moins le troisième axe Z. Ceci permet astucieusement d'absorber un potentiel mouvement axial (selon le troisième axe Z) de la bague d'étanchéité 17 le long de la tête 16 lorsque la deuxième bride 111 est rigidement fixée sur la première bride 11.

Par exemple, le godron s'étend sur au moins une partie d'une circonférence de la paroi latérale de la conduite 36. Dans le cas présent, le godron est fermé. Le godron forme ainsi une circonférence entière sur la paroi latérale de la conduite 36. Le godron est ici conformé en un anneau.

La rainure associée a ici une forme similaire. La rainure associée forme ici également un anneau sur la paroi latérale externe de la tête 16.

Les moyens d'accouplement comportent par exemple au moins un élément en relief 33 agencé au niveau de la troisième zone. Au moins un élément en relief 33 est porté par la bague d'étanchéité 17 et/ou au moins un élément en relief 33 est porté par la base 12. Dans le cas présent, c'est la bague d'étanchéité 17 qui porte le ou les éléments en relief 33. De préférence, l'élément en relief est en appui contre la face inférieure de la base 12 (dans le cas présent la deuxième marche 22).

De préférence, l'élément en relief 33 est venu de matière avec l'élément le portant (bague d'étanchéité 17 ou base 12).

Par exemple, l'élément en relief est un cordon. Le cordon présente optionnellement une section radiale au moins en partie courbe, et par exemple en arc de cercle et par exemple en demi-cercle. De la sorte, au moins le sommet du cordon est écrasé par la surface de l'élément (bague d'étanchéité 17 ou base 12) en regard. Dans le cas présent, mis à part au niveau des éléments en relief 33, la face inférieure de la base 12 n'est pas en contact avec la bague d'étanchéité 17. Par exemple, le cordon s'étend sur au moins une partie d'une circonférence de la face supérieure de la bague d'étanchéité 17. Dans le cas présent, le cordon est fermé. Le cordon forme ainsi une circonférence entière sur la face inférieure de la bague d'étanchéité 17. Le cordon est ici conformé en un anneau.

Le cordon est ici agencé à la périphérie externe de la face inférieure de la bague d'étanchéité 17. Le cordon forme ainsi un rebord inférieur à la bague d'étanchéité 17.

On comprend donc qu'il n'existe pas de rainure associée aux éléments en relief 33 : les éléments en relief 33 viennent directement en contact avec la surface plane de l'élément (bague d'étanchéité 17 ou base 12) en regard.

De préférence, la bague d'étanchéité 17 et la deuxième bride 111 sont pourvus de moyens d'accouplement. De préférence, la bague d'étanchéité 17 et la deuxième bride 111 comportent des moyens d'accouplement agencés dans au moins une zone de l'interface entre la bague d'étanchéité 17 et la deuxième bride 111 et de préférence dans au moins deux zones différentes de l'interface entre la bague d'étanchéité 17 et la deuxième bride 111.

Par exemple la première zone correspond à l'interface entre le fond 118 du logement 116 et la face supérieure de la bague d'étanchéité 17 (i.e. la face supérieure de la rondelle 35). Par exemple la deuxième zone correspond à l'interface entre la face principale 114 et la face supérieure du rebord formé par la partie inférieure 29.

Les moyens d'accouplement comportent par exemple au moins un élément en relief 39 agencé au niveau de la première zone. Au moins un élément en relief 39 est porté par la bague d'étanchéité 17 et/ou au moins un élément en relief 39 est porté par la deuxième bride 111. Dans le cas présent, c'est la bague d'étanchéité 17 qui porte le ou les éléments en relief 39. De préférence, le ou les éléments en relief sont en appui contre le fond 118. De préférence, le ou les éléments en relief sont venus de matière avec l'élément le portant (bague d'étanchéité 17 ou deuxième bride 111).

Par exemple, au moins un élément en relief est un cordon. Le cordon présente optionnellement une section radiale en pointe et par exemple en triangle. De la sorte, au moins le sommet du cordon est écrasé par la surface de l'élément (bague d'étanchéité 17 ou deuxième bride 111) en regard. Dans le cas présent, mis à part au niveau des éléments en relief 39, la face supérieure de la rondelle 35 n'est pas en contact avec le fond 118 du logement 116.

Par exemple, le cordon s'étend sur au moins une partie d'une circonférence de la face supérieure de la bague d'étanchéité 17. Dans le cas présent, le cordon est fermé. Le cordon forme ainsi une circonférence entière sur la face supérieure de la bague d'étanchéité 17. Le cordon est ici conformé en un anneau.

On comprend donc qu'il n'existe pas de rainure associée aux éléments en relief 39 : les éléments en relief 39 viennent directement en contact avec la surface plane de l'élément (bague d'étanchéité 17 ou base 111) en regard. Dans le cas présent, mis à part au niveau des éléments en relief 39, le fond 118 n'est pas en contact avec la bague d'étanchéité 17. De préférence, les moyens d'accouplement comportent deux éléments en relief 39 agencés au niveau de la première zone. Le deuxième élément en relief 39 est ici identique au premier élément en relief 39 qui a été décrit à la différence que le deuxième cordon présente un diamètre plus important que le premier cordon (de sorte à entourer extérieurement et cir-conférentiellement le premier cordon.

Les moyens d'accouplement comportent par exemple au moins un élément en relief 40 agencé au niveau de la deuxième zone. Au moins un élément en relief 40 est porté par la bague d'étanchéité 17 et/ou au moins un élément en relief 40 est porté par la deuxième bride 111. Dans le cas présent, c'est la bague d'étanchéité 17 qui porte le ou les éléments en relief 40. De préférence, le ou les éléments en relief 40 sont alors en appui contre la deuxième bride 111. De préférence, le ou les éléments en relief 40 sont venus de matière avec l'élément le portant (bague d'étanchéité 17 ou deuxième bride 111).

Par exemple, l'élément en relief 40 est un cordon. Le cordon présente optionnellement une section radiale au moins en partie courbe, et par exemple en arc de cercle et par exemple en demi-cercle.

Par exemple, le cordon s'étend sur au moins une partie d'une circonférence de la face supérieure de la bague d'étanchéité 17. Dans le cas présent, le cordon est fermé. Le cordon forme ainsi une circonférence entière sur la face inférieure de la bague d'étanchéité 17. Le cordon est ici conformé en un anneau.

Le cordon est ici agencé à la périphérie externe de la face supérieure de la partie inférieure 29. Le cordon forme ainsi un rebord supérieur à la bague d'étanchéité 17. On comprend donc qu'il n'existe pas de rainure associée à l'élément en relief 40 : l'élément en relief 40 vient directement en contact avec la surface plane de l'élément (bague d'étanchéité 17 ou base 111) en regard. Dans le cas présent, mis à part au niveau de l'élément en relief 40, la face inférieure de la base 112 n'est pas en contact avec la bague d'étanchéité 17.

Les différents éléments décrits (et en particulier la bague d'étanchéité 17) sont étanches au fluide transporté par le système de raccordement 10.

En service, la bague d'étanchéité 17 est montée sur la tête 16. Par exemple la bague d'étanchéité 17 est montée par clipsage sur la tête 16. A cet effet, l'organe mâle 37 est encliqueté dans l'organe femelle 38.

La deuxième bride 111 est alors emmanchée sur la première bride 11. La deuxième bride 111 est par exemple agencée en enfonçant le logement dans la tête 16 recouverte de la bague d'étanchéité 17. Les deux brides 11, 111 sont alors fixées entre elles via les moyens de fixation, renforçant l'étanchéité de l'ensemble.

La goupille 28 est également fixée sur la deuxième bride 112 pour assurer la fixation des deux brides 11, 111 entre elles et/ou leur positionnement relatif.

Une fois fixées entre elles, les deux brides 11, 111 compriment entre elles la bague d'étanchéité 17. Ceci a pour effet d'écraser les éléments en relief portés par la bague d'étanchéité 17 contre les surfaces en regard (dans le cas présent, les éléments en relief 33, 39 et 40) ainsi que d'enfoncer les surfaces de la bague d'étanchéité 17 en regard des autres éléments en relief (dans le cas présent les éléments en relief 32).

Dans le cas présent, de par la nature bi-matière de la bague d'étanchéité 17, les éléments en relief 33 et 40 s'écrasent davantage que les éléments en relief 39 ou l'enfoncement de la surface en regard des éléments en relief 32. En particulier, de par leur nature, les éléments en relief 33 et 40 s'écrasent de sorte à former naturellement un ou plusieurs joints d'étanchéité en matière élastomère. Le système de raccordement 10 décrit s'avère ainsi particulièrement optimisé en termes d'étanchéité.

Par exemple, les différents éléments en relief 32, 33, 39 et 40 peuvent permettre de participer à l'étanchéité du système 10 une fois les deux brides 11, 111 fixées entre elles.

Par exemple, l'ensemble 37/38 peut permettre de participer à l'étanchéité du système 10 une fois les deux brides 11, 111 fixées entre elles.

Ainsi, la bague d'étanchéité 17 permet de participer à l'étanchéité externe (tête 16/logement 116) comme interne (entre les deux canaux) du système 10.

De manière astucieuse, une unique pièce (la bague d'étanchéité 17) permet ici d'assurer l'étanchéité interne et externe dans le système.

Par ailleurs, la bague d'étanchéité 17 est conformée de sorte à assurer une quadruple étanchéité :
- entre la bague d'étanchéité 17 et la tête 16 (entre deux zones différentes),
- entre la bague d'étanchéité 17 et le fond du logement 18,
- entre la bague d'étanchéité 17 et la marche 22,
- entre la bague d'étanchéité 17 et la bordure 26.

De manière astucieuse, cette unique pièce peut être aisément remplacée par une pièce identique lors d'une opération de manutention si la pièce initiale est usée.

Par ailleurs, le contact plan entre la face principale 114 et la première marche 20 permet de participer à l'étanchéité du système 10 une fois les deux brides 11, 111 fixées entre elles.

De plus, la présence des moyens d'accouplement 37/38 permet d'assurer un bon maintien en place de la bague d'étanchéité 17 sur la première bride 11 même lorsque les deux brides 11, 111 ne sont pas serrées entre elles. Ceci facilite les opérations de manutention et/ou de montage du système 10.

De plus, le système 10 décrit est démontable et remontable. Par exemple, le système 10 présente une meilleure endurance et/ou vieillit plus lentement.

Par exemple, le système 10 est relativement peu coûteux à produire et/ou à réparer.

Par exemple, le système 10 est relativement aisé à produire et/ou à réparer. En particulier, la bague d'étanchéité 17 porte au moins une partie des éléments en relief (organe mâle inclus) et de préférence la majorité desdits éléments en relief. Or la bague d'étanchéité 17 pouvant être obtenue par moulage et/ou surmoulage et/ou injection, de par son matériau, il s'avère relativement aisé d'incorporer à la bague d'étanchéité 17 de tels éléments en relief. Les deux brides 11, 111 s'avèrent en outre relativement simple de structure. Le nombre de pièces présentes dans le système 10 est relativement restreint.

Par exemple, le système 10 s'avère relativement simple à assembler, à démonter et à remonter.

Par exemple, le système 10 est aisé à monter dans une installation de transport de fluide.

Bien entendu, l'invention n'est pas limitée au mode de réalisation décrit mais englobe toute variante entrant dans le champ de l'invention telle que définie par les revendications.

En particulier, les différents organes d'accouplement pourront être différents de ce qui a été indiqué que ce soit en termes de nombre et/ou de forme.

Par exemple, bien qu'ici les différents éléments en relief s'étendent à 360 degrés sur toute une circonférence de l'élément associé (et par exemple la bague d'étanchéité), au moins un élément en relief pourra ne s'étendre que sur une partie seulement de ladite circonférence et en particulier l'élément agencé sur la surface interne de conduite 36. On pourra alors optionnellement avoir plusieurs sous-éléments en relief (formant alors conjointement un unique élément en relief global), s'étendant chacun sur une partie seulement d'une même circonférence, avec de préférence une répartition à intervalle régulier des différents sous-éléments en relief le long de ladite circonférence. La rainure potentiellement associée pourra être continue ou pourra également ne s'étendre que sur une partie seulement de la circonférence. Optionnellement, on pourra avoir plusieurs rainures s'étendant chacune sur une partie seulement d'une même circonférence, avec de préférence une répartition à intervalle régulier des différentes rainures le long de ladite circonférence. On pourra par exemple avoir au moins deux couples éléments en relief/rainure et par exemple au moins trois couples éléments/rainure agencés sur une même circonférence. On pourra également avoir au moins deux éléments en relief agencés à des hauteurs différentes (selon le troisième axe Z) sur l'un ou l'autre de la bague d'étanchéité ou de la tête, et avoir deux rainures disposées en conséquence (donc également à des hauteurs différentes). En cas d'au moins deux couples éléments en relief/rainures, au moins deux couples éléments en relief/rainures pourront être identiques ou différents.

Quel que soit l'élément en relief considéré, il pourra présenter une section transversale en polygone (carré, rectangle, trapèze, ...) et/ou une section transversale au moins partiellement arrondie et par exemple une section transversale en arc de cercle et par exemple en demi-cercle.

Quel que soit l'élément en relief considéré, la rainure associée pourra présenter une même section transversale que lui ou bien une autre section transversale. On pourra par exemple avoir une rainure avec une section transversale en trapèze et un élément en relief associé en rectangle, en carré ou bien en arc de cercle. Quel que soit l'élément en relief considéré, la rainure pourra présenter une section transversale en polygone (carré, rectangle, trapèze, ...) et/ou une section transversale au moins partiellement arrondie et par exemple une section transversale en arc de cercle et par exemple en demi-cercle.

La bague d'étanchéité pourra présenter une autre forme que celle précitée. Par exemple, la face inférieure de la base (en appui sur la première bride) pourra comporter une portion de stabilisation (par exemple en forme d'anneau). Ladite portion pourra par exemple être agencée à niveau de la conduite.

Le système pourra comporter optionnellement au moins un ou plusieurs joints d'étanchéités. Par exemple, une gorge pourra être ménagée dans le fond du logement afin d'y agencer un joint d'étanchéité de forme standard.

Bien qu'ici la bague d'étanchéité présente au moins deux zones en matériau différent, la bague d'étanchéité pourra être dans un unique matériau.

## Revendications

1. Système de raccordement comprenant une première bride (11) et une deuxième bride (111), chacune des brides étant munie d'un canal la traversant de part en part, le système de raccordement comprenant par ailleurs une bague d'étanchéité (17) agencée entre les deux brides et munie d'une ouverture (34) assurant la mise en communication des deux canaux entre eux, **caractérisé en ce que** la bague d'étanchéité comporte au moins :
- Une partie inférieure (29) reposant au moins en partie sur au moins une portion de la première bride, et
- Une partie supérieure (30) prolongeant la partie inférieure, au moins une portion de la partie supérieure étant en contact avec au moins une portion de la deuxième bride,
l'une de la partie inférieure ou de la première bride comprenant au moins un élément en relief contre lequel l'autre de la partie inférieure ou de la première bride vient en appui ; et l'une de la partie supérieure ou de la deuxième bride comprenant au moins un élément en relief contre lequel l'autre de la partie supérieure ou de la deuxième bride vient en appui.

2. Système selon la revendication 1, dans lequel la bague d'étanchéité (17) est conformée de sorte à présenter au moins une première zone et une deuxième zone distincte de la première zone, la première zone étant dans un matériau différent de celui de la deuxième zone.

3. Système selon l'une des revendications précédentes, dans lequel la bague d'étanchéité (17) est montée sur l'extérieur d'une portion de la première bride (11).

4. Système selon la revendication 3, dans lequel la portion de la première bride (11) est conformée en une tête (16) s'étendant axialement en direction de la deuxième bride (111).

5. Système selon la revendication 3 ou la revendication 4, dans lequel la bague d'étanchéité (17) comporte au moins un élément additionnel en relief apte à venir en appui contre une surface externe de la tête.

6. Système selon l'une des revendications 2 à 5, dans lequel un logement (116) est ménagé dans la deuxième bride (111), la portion de la première bride (11) étant logée au moins partiellement dans le logement, la bague d'étanchéité (17) étant agencée entre le logement et ladite portion.

7. Système selon la revendication 6, dans lequel une gorge est ménagée dans le fond du logement (116), le système comprenant un joint d'étanchéité agencé dans ladite gorge.

8. Système selon l'une des revendications précédentes, dans lequel la bague d'étanchéité (17) est au moins en partie en un matériau élastiquement déformable.

9. Système selon l'une des revendications précédentes, dans lequel la première zone est formée au moins de la partie supérieure (30) et la deuxième zone est ici formée d'au moins une partie de la partie inférieure (29), la deuxième zone étant dans un matériau plus souple que la première zone.

10. Système selon l'une des revendications précédentes, dans lequel la partie supérieure (30) est conformée en un godet.

11. Système selon l'une des revendications précédentes, dans lequel la partie inférieure (29) est conformée en une couronne.

12. Système selon l'une des revendications précédentes, dans lequel la partie supérieure (30) porte au moins un des éléments en relief qui présente au moins une portion dont une section transversale est en pointe.

13. Système selon l'une des revendications précédentes, dans lequel la partie inférieure (29) porte au moins un des éléments en relief qui présente au moins une extrémité libre arrondie ou polygonale.

14. Système selon l'une des revendications précédentes, dans lequel la bague d'étanchéité (17) est conformée en un solide de révolution.
